Europäisches Patentamt

European Patent Office

Office européen des brevets

(11) Veröffentlichungsnummer: **0 327 853 B1**

(19)

# (12) EUROPÄISCHE PATENTSCHRIFT

(45) Veröffentlichungstag der Patentschrift: **10.02.93**

(21) Anmeldenummer: **89100923.5**

(22) Anmeldetag: **20.01.89**

(51) Int. Cl.⁵: **B60R 21/32**

(54) Verfahren zur Wirksamschaltung eines Sicherheitssystems.

(30) Priorität: **05.02.88 DE 3803426**

(43) Veröffentlichungstag der Anmeldung:
**16.08.89 Patentblatt 89/33**

(45) Bekanntmachung des Hinweises auf die
Patenterteilung:
**10.02.93 Patentblatt 93/06**

(84) Benannte Vertragsstaaten:
**DE ES FR GB IT**

(56) Entgegenhaltungen:
**EP-A- 0 292 669**
**DE-A- 2 123 359**
**DE-A- 2 920 147**
**FR-A- 2 184 307**

**INGENIEURS DE L'AUTOMOBILE, Nr. 6, 1982,**
**Seiten 69-77, Paris, FR; W. SUCHOWERSKYJ:**
**"Evolution en matière de détecteurs de**
**choc"**

(73) Patentinhaber: **AUDI AG**
**Auto-Union-Strasse 1 Postfach 220**
**W-8070 Ingolstadt(DE)**

(72) Erfinder: **Sterler, Georg**
**Mozartstrasse 20**
**W-8071 Grossmehring(DE)**
Erfinder: **Bader, Heinz**
**Adrian-v.-Riedl Strasse 3**
**W-8859 Karlshuld(DE)**

(74) Vertreter: **Le Vrang, Klaus**
**AUDI AG Postfach 220 Patentabteilung I/EOP**
**W-8070 Ingolstadt(DE)**

EP 0 327 853 B1

**Beschreibung**

Die Erfindung betrifft ein Verfahren zur Wirksamschaltung eines die Insassen in einem Kraftfahrzeug schützenden Sicherheitssystems gemäß Oberbegriff des Anspruchs 1.

Ein Beispiel für ein derartiges Sicherheitssystem ist der sogenannte Airbag, ein beispielsweise im Lenkrad untergebrachter Luftsack, der bei einem Unfall blitzschnell aufgeblasen wird und somit die beim Aufprall nach vorne schleudernden Passagiere auffängt. Auch aktivierbare Seitenpolster, beispielsweise an der Türoberkante oder am vorderen Dachpfosten gehören zu solchen Sicherheitseinrichtungen, ebenso wie pyrotechnische Gurtstrammer.

Allen derartigen Sicherheitsvorrichtungen ist gemeinsam, daß sie beim Unfall aktiviert werden müssen, und dazu ist eine geeignete Sensorik vonnöten. Üblicherweise wird mit Beschleunigungssensoren gearbeitet, die bei starken positiven oder negativen Beschleunigungen ein Signal abgeben, dieses Signal wird im weiteren ausgewertet.

Dabei wird bei herkömmlichen Systemen aus dem Beschleunigungssignal durch eine entsprechende Integration ein Geschwindigkeitssignal gebildet, und die Höhe dieses Signales dient als Kriterium, ob eine Auslösung notwendig ist oder nicht. Die Festlegungen der Schwellwerte sowohl bei dem Beschleunigungssignal als auch bei dem Geschwindigkeitssignal werden durch entsprechende Versuche ermittelt.

Aus der FR-A 21 84 307 ist eine Schaltungsanordnung zur Auswertung des Signals eines Beschleunigungssensors in einem Airbag-Auslösesystem bekannt, die das Signal doppelt integriert, um daraus eine Angabe der zu erwartenden Vorverlagerung der Fahrzeuginsassen zu erzielen. Bei Überschreitung eines Schwellwertes des so gewonnenen Signals wird das Airbagsystem ausgelöst. Damit soll der fiktive Weg einer trägen Masse dargestellt werden.

Nachteilig dabei ist, daß der zeitliche Verlauf des Beschleunigungssignales nicht hinreichend berücksichtigt wird. Sind beispielsweise die Schwellwerte in Crash-Versuchen aufgrund des Aufpralls auf starre Barrieren festgelegt worden, sind die festgelegten Schwellen nicht aussagekräftig bei Aufprall auf anderen Hindernissen, z. B. einem Baum, wodurch ggf. die Auslösefunktion nicht im notwendigen Maße erfüllt wird.

Aufgabe der Erfindung ist es, zuverlässig die Notwendigkeit der Auslösung von Sicherheitseinrichtungen zu gewährleisten.

Die Aufgabe wird gelöst durch den Hauptanspruch.

Die grundlegende Idee der Erfindung ist es, nicht aufgrund allein des Beschleunigungs- und Geschwindigkeitssignales die Sicherheitseinrichtung auszulösen, sondern aus den zur Verfügung stehenden Werten ein Signal zu gewinnen, das die beim plötzlichen Verzögern des Fahrzeugs aufgrund der Trägheit auftretende Insassenvorverlagerung berechnet. Überschreitet diese Insassenvorverlagerung einen vorgebbaren Wert, ist ein ggf. zu Verletzungen führender Aufprall auf Lenkrad, Windschutzscheibe oder andere Bauteile im Innenraum des Kraftfahrzeuges zu erwarten, und es wird dementsprechend das Sicherheitssystem aktiviert, beispielsweise der Airbag aufgeblasen.

Das Gefährdungssignal, das die Insassenvorverlagerung ausdrückt, kann in mehreren kurzen Zeitabschnitten berechnet werden, um damit eine Aussage über die Insassenvorverlagerung zu treffen. Wird übereinstimmend in mindestens zwei aufeinanderfolgenden Zeitabschnitten der Schwellwert überschritten, wird das Sicherheitssystem aktiviert.

Als Aufnehmer für das Signal dient ebenfalls ein Sensor, der die Beschleunigung mißt Die weiterhin notwendigen Werte zur Berechnung lassen sich durch Integrierung und/oder Differenzierung ermitteln.

Zur konkreten Berechnung kann folgende Formel dienen:

$$S_I (t_x + Z) = K1 \quad S_I (t_x) +$$

$$K2 \cdot v_{rel} (t_x) \cdot Z +$$

$$K3 \cdot a (t_x) \frac{z^2}{2} +$$

$$K4 \cdot \frac{da (t_x)}{dt} \frac{z^3}{3}$$

wobei:

$t_x$ = Zeitpunkt x

$z$ = Aktivierungszeit der Sicherheitseinrichtung

$a (t)$ = Beschleunigungssensorsignal zum Zeitpunkt t

$v_{rel}$ = Relativgeschwindigkeit, berechnet durch Integration von a (t)

$S_I (t)$ = Vorverlagerung der Insassen zum Zeitpunkt t (berechnet durch doppelte Integration des Beschleunigungssensorsignals)

$K_1$ -$K_4$ = Bewertungsfaktoren

Gemäß dieser Formel wird der Weg zu einem Zeitpunkt $t_x$ prognostiziert, den die Insassen relativ zum Fahrzeug zu einem Zeitpunkt $t_x$ + Z zurückgelegt haben werden, wobei Z der Zeitraum ist, der zur Aktivierung des Sicherheitssystems notwendig ist, beispielsweise zum Aufblasen des Airbags. Dieser Weg setzt sich zusammen aus dem von der Nullstellung bis zum Zeitpunkt $t_x$ bereits zurückgelegten Weg, der Geschwindigkeit, der weiteren Beschleunigung und der ersten Ableitung der Beschleunigung nach der Zeit. Entsprechende Faktoren wichten dabei die einzelnen Summanden.

Bei Anwendung dieser Formel wird der Insasse als frei bewegliche Masse gegenüber dem Fahrzeug dargestellt. Weitere Einflüsse, wie z. B. das Abstützen des Fahrers am Lenkrad, die Federwirkung der Fahrzeugsitze und ähnliches kann dadurch berücksichtigt werden, daß entsprechende Korrekturfaktoren die Vorverlegung des Insassen als ein Masse-Feder-System beschreiben.

Dabei können die Federkonstanten, um zu einer noch genaueren Beschreibung zu kommen, als nicht linear angenommen werden.

Weiterhin ist es möglich, einen weiteren Beschleunigungsaufnehmer vorzusehen, der die Querbeschleunigung des Fahrzeuges mißt, der also um 90° gegenüber dem in Längsbeschleunigung erfassenden Sensor gedreht ist. Damit ist es möglich, eine richtungsabhängige Vorverlagerung zu errechnen, indem aus beiden Aufnehmersignalen die Vorverlagerungen berechnet werden und diese dann vektoriell addiert werden. Die Auslöseschwelle ist dann nicht konstant, sondern weist eine Richtungscharakteristik auf. Zusätzlich wird die Auslösung richtungsselektiver Sicherheitseinrichtungen (z. B. Türluftkissen) möglich, bzw. die Nichtauslösung einer Sicherheitseinrichtung, wenn deren Wirkungsrichtung nicht mehr ausreichend mit der Bewegungsrichtung der Insassen übereinstimmt.

Zur weiteren Optimierung läßt sich in die Berechnung eingeben, ob die Fahrer angeschnallt sind und ob das Fahrzeug mit einem mechanischen System ausgerüstet ist, das aufprallgefährdete Teile aus dem zu erwartenden Aufschlagbereich entfernt (bekannt unter dem eingetragenen Warenzeichen "procon-ten").

Im folgenden wird die Erfindung anhand der Figuren beschrieben. Es zeigen:

Fig. 1    ein Blockschaltbild, und;

Fig. 2    die Ein- und Ausgänge einer Recheneinheit.

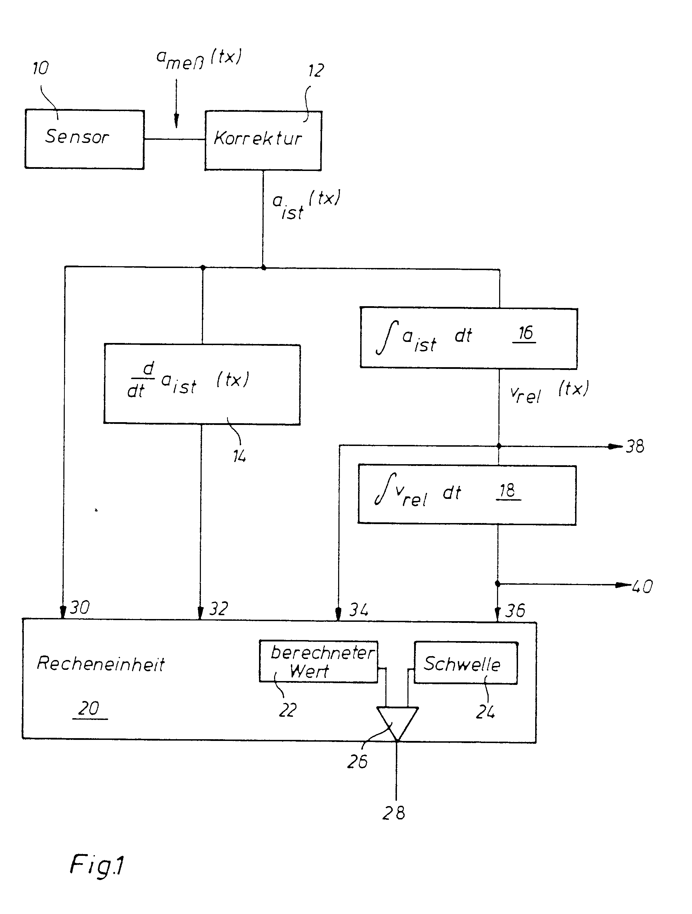

In Fig. 1 ist mit dem Bezugszeichen 10 ist ein Sensor bezeichnet, an dessen Ausgang ein Beschleunigungssignal ($a_{meß} (t_x)$) zum Zeitpunkt $t_x$ auftritt, was von der Größe der Beschleunigung abhängt. Ein Korrekturglied 12 ist vorgesehen, um aus dem gemessenen Beschleunigungssignal ein bereinigtes Signal zu erzeugen, dessen Signalverlauf in etwa linear mit der tatsächlich auftretenden Beschleunigung ist.

Eine Recheneinheit 20 ist vorgesehen, die vier Eingänge 30, 32, 34 und 36 aufweist. Das von der Korrektureinheit 12 abgegebene bereinigte Beschleunigungssignal $a_{ist} (t_x)$ wird dem Eingang 30 der Recheneinheit unmittelbar zugeführt.

Dem Eingang 32 wird das differenzierte Signal zugeführt, das am Ausgang einer Differenzierungseinheit 14 erhalten wird, deren Eingang das Beschleunigungssignal zugeführt wird.

Weiterhin wird das Beschleunigungssignal $a_{ist}$ ($t_x$) einer Integriereinheit 16 zugeführt, an deren Ausgang dementsprechend ein Signal steht, das das über die Zeit integrierte Beschleunigungssignal, also das Geschwindigkeitssignal $V_{rel}$ ($t_x$) angibt. Dieses Signal wird dem Eingang 34 der Recheneinheit 20 zugeführt und gleichzeitig einer weiteren Integriereinheit 18, die somit am Ausgang ein Signal für die integrierte Geschwindigkeit, also den Weg, angibt. Das Geschwindigkeitssignal läßt sich außerdem an einem Ausgang 38, das Wegsignal an einem Ausgang 40 für weitere Verwendungen abgreifen. Das Wegsignal wird dem Eingang 36 der Recheneinheit 20 zugeführt.

Aus diesen Werten wird, beispielsweise nach der oben genannten Formel, ein Wert für die zu erwartende Insassenvorverlagerung zum Zeitpunkt $t_x$ + Z, hier als Wert 22 dargestellt, ermittelt. Gleichzeitig ist eine Schwelle 24 vorgesehen, und die beiden Werte werden in einem Komparator 26 verglichen. Überschreitet der berechnete Werte 22 die Schwelle 24, gibt der Komparator 26 an seinem Ausgang 28 ein Signal ab, das dann dementsprechend die Sicherheitseinrichtung aktiviert, beispielsweise den Airbag zündet.

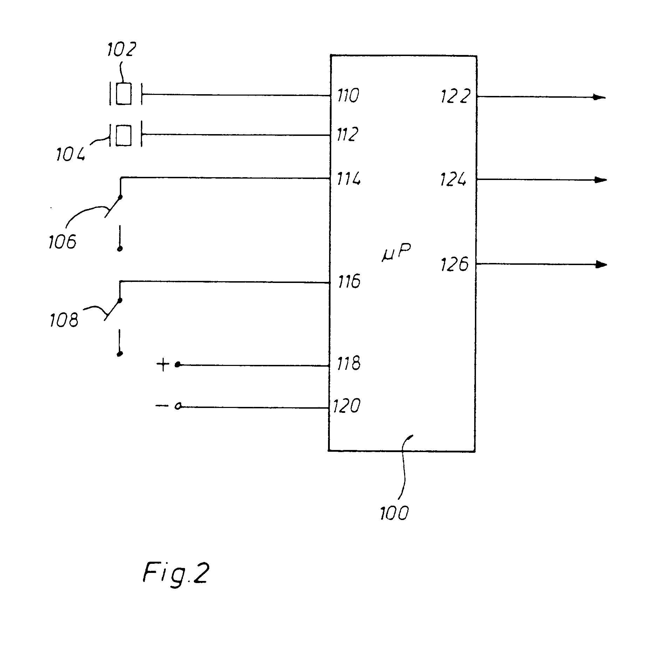

Konkret wird dieser Ablauf im Rahmen eines Mikrocomputers durchgeführt, der in Fig. 2 mit dem Bezugszeichen 100 dargestellt ist. Ein erster Beschleunigungsaufnehmer 102 liefert sein Signal an den Eingang 110, ein zweiter Beschleunigungsaufnehmer 104 sein Signal an den Eingang 112. Diese beiden Beschleunigungsaufnehmer 102 und 104 wirken rechtwinklig zu-einander, so daß die Werte der Insassenvorverlagerung in allen Richtungen parallel zur Bewegungsebene des Fahrzeuges ermittelt werden können. Ein Schalter 106 gibt an, ob der Fahrer und/oder der Beifahrer angegurtet sind, dieser Schalter wird auf den Eingang 114 gelegt. Bei getrennter Berücksichtigung für Fahrer und Beifahrer und ggf. weitere Insassen ist eine entsprechende Mehrzahl von derartigen Schaltern 106 vorzusehen.

Ein Schalter 108 gibt am Eingang 116 des Mikroprozessors ein Signal, das repräsentativ dafür ist, ob ein Sicherheitssystem wie beispielsweise procon-ten vorgesehen ist und angesprochen hat. Die Stromversorgungen des Mikroprozessors sind mit den Eingängen 118, 120 bezeichnet.

Es sind für den Mikroprozessor drei Ausgänge vorgesehen, ein Ausgang 122, der, abhängig vom berechneten Ergebnis, den Airbag des Fahrers zündet. Ein Ausgang 124 in ähnlicher Weise zündet den Airbag des Beifahrers, und ein Ausgang 126 steht repräsentativ für die Ansteuerung weiterer Sicherheitseinrichtungen, z. B. von Türluftkissen. Es dürfte ohne weiteres einleuchten, daß bei Bedarf weitere Ausgänge geschaffen werden können.

## Patentansprüche

1. Verfahren zur Wirksamschaltung eines die Insassen schützenden Sicherheitssystems eines Fahrzeugs, bei dem

a) das von mindestens einem Beschleunigungssensor (10, 102, 104) abgegebene Signal ($a_{meß}$ ($t_x$)) ausgegeben wird, wobei

b) aus dem Signal ($a_{meß}$ ($t_x$)) des Beschleunigungssensors (10, 102, 104) durch doppelte Integration ein die Vorverlagerung ($S_I$ (t)) der Insassen beschreibendes Gefährdungssignal ($S_I$ ($t_x$ + Z)) abgeleitet und

c) das Sicherheitssystem aktiviert wird, wenn das Gefährdungssignal ($S_I$ ($t_x$ + Z)) nach einer plötzlichen Verzögerung des Fahrzeugs einen vorgebbaren Schwellwert über mindestens zwei Zeitabschnitte hinweg überschreitet,

dadurch gekennzeichnet, daß

d) das Beschleunigungssignal ($a_{meß}$ ($t_x$)) zu einem linear mit der tatsächlich auftretenden Beschleuni-gung verlaufenden bereinigten Beschleunigungssignal ($a_{ist}$ ($t_x$)) korrigiert und daß eine zu einem bestimmten Zeitpunkt ($t_x$) zu erwartende Vorverlagerung ($S_I$ ($t_x$ + Z)) der Insassen angebende Gefährdungssignal aus einer bewerteten Summe aus

e) der durch doppelte Integration des bereinigten Beschleunigungssignals bestimmten Vorverlage-rung ($S_I$ ($t_x$)) der Insassen,

f) einer durch eine einfache Integration des bereinigten Beschleunigungssignals bestimmten Relativ-geschwindigkeit ($v_{rel}$ ($t_x$)) der Insassen,

g) dem bereinigten Beschleunigungssignal ($a_{ist}$ ($t_x$)) selbst, und

h) dem differenzierten bereinigten Beschleunigungssignal (da ($t_x$)/dt), jeweils zum Zeitpunkt $t_x$, abgeleitet wird.

2. Verfahren nach Anspruch 1, dadurch gekennzeichnet, daß das Gefährdungssignal nach folgender

Formel ermittelt wird:

$$S_I(t_x + Z) = K1 \quad S_I(t_x) +$$

$$K2 \cdot v_{rel}(t_x) \cdot Z +$$

$$K3 \cdot a(t_x) \frac{z^2}{2} +$$

$$K4 \cdot \frac{da(t_x)}{dt} \frac{z^3}{3}$$

wobei:

$t_x$ =     Zeitpunkt x

$z$ =     Aktivierungszeit der Sicherheitseinrichtung

$a(t)$ =     Beschleunigungssensorsignal zum Zeitpunkt t

$v_{rel}$ =     Relativgeschwindigkeit, berechnet durch Integration von $a(t)$

$S_I(t)$ =     Vorverlagerung der Insassen zum Zeitpunkt t (berechnet durch doppelte Integration des Beschleunigungssensorsignals)

$K_1$ -$K_4$ =     Bewertungsfaktoren

**3.** Verfahren nach Anspruch 1 oder 2, dadurch gekennzeichnet, daß zusätzlich zur Beschleunigung in Fahrzeuglängsachse die Querbeschleunigung ermittelt wird zur Berechnung der Größe und der Richtung der zu erwartenden Insassenverlagerung.

**Claims**

**1.** Method for switching into operation a vehicle safety system which protects the occupants, involving

a) outputting of the signal ($a_{meas}(t_x)$) emitted by at least one acceleration sensor (10, 102, 104),

b) a hazard signal ($S_I(t_x + Z)$) describing the forward shift ($S_I(t)$) of the occupants being derived by double integration from the signal ($a_{meas}(t_x)$) from the acceleration sensor (10, 102, 104), and

c) activation of the safety system if after a sudden shift forwards of the vehicle the hazard signal ($S_I(t_x + Z)$) exceeds a specifiable threshold value over at least two time intervals,

characterised by

d) correcting the acceleration signal ($a_{meas}(t_x)$) to give a corrected acceleration signal ($a_{act}(t_x)$) which runs linearly with the acceleration that actually occurs, and by deriving a hazard signal indicating the forward shift ($S_I(t_x + Z)$) of the occupants that can be expected at a given point in time ($t_x$) from a weighted product of

e) the forward shift ($S_I(t_x)$) of the occupants, determined by double integration of the corrected acceleration signal,

f) a relative velocity ($v_{rel}(t_x)$) of the occupants, determined by a simple integration of the corrected acceleration signal,

g) the corrected acceleration signal ($a_{act}(t_x)$) itself, and

h) the differentiated corrected acceleration signal ($da(t_x)/dt$), in each case at point in time $t_x$.

**2.** Method according to claim 1, characterised in that the hazard signal is determined on the basis of the following formula:

5

$$S_I\ (t_x\ +\ Z)\ =\ K1\quad S_I\ (t_x)\ +$$

$$K2\ \cdot\ v_{rel}\ (t_x)\ \cdot\ Z\ +$$

$$K3\ \cdot\ a\ (t_x)\ \frac{z^2}{2}\ +$$

$$K4\ \cdot\ \frac{da\ (t_x)}{dt}\ \frac{z}{3}$$

where:

$t_x$ =     point in time x  
$z$ =     safety mechanism activation time  
$a\ (t)$ =     acceleration sensor signal at point in time t  
$v_{rel}$ =     relative velocity, calculated by integrating $a\ (t)$  
$S_I\ (t)$ =     forward shift of the occupants at point in time t (calculated by double integration of the acceleration sensor signal)  
$K_1 - K_4$ =     weighting factors

**3.** Method according to claim 1 or 2, characterised in that in addition to the acceleration along the vehicle's longitudinal axis the transverse acceleration is determined to calculate the magnitude and the direction of the forward shift of the occupants that can be expected.

**Revendications**

**1.** Procédé pour la commutation à l'état actif d'un système de sécurité protégeant les occupants d'un véhicule, dans lequel

a) le signal [$a_{meß}\ (t_x)$] délivré par au moins un détecteur d'accélération (10, 102, 104) est émis,

b) un signal de danger [$S_I\ (t_x\ +\ z)$], décrivant le déplacement en avant [$S_I\ (t)$] des occupants, est tiré par double intégration du signal [$a_{meß}\ (t_x)$] du détecteur d'accélération, et

c) le système de sécurité est activé lorsque le signal de danger [$S_I\ (t_x\ +\ z)$] dépasse, après un ralentissement brusque du véhicule, une valeur de seuil prédéfinissable pendant au moins deux périodes de temps,

caractérisé en ce que

d) le signal d'accélération [$a_{meß}\ (t_x)$] est corrigé en un signal d'accélération corrigé [$a_{ist}\ (t_x)$] qui varie linéairement avec l'accélération se produisant effectivement, et en ce qu'un signal de danger, indiquant le déplacement présumé en avant [$S_I\ (t_x\ +\ z)$] des occupants à un instant déterminé ($t_x$) est tiré

e) du déplacement en avant [$S_I\ (t_x)$] des occupants, déterminé par double intégration du signal d'accélération corrigé,

f) d'une vitesse relative [$v_{rel}\ (t_x)$] des occupants, déterminée par simple intégration du signal d'accélération corrigé,

g) du signal d'accélération corrigé [$a_{ist}\ (t_x)$] lui-même, et

h) du signal d'accélération corrigé différentié [$da\ (t_x)/dt$], chaque fois à l'instant $t_x$.

**2.** Procédé selon la revendication 1, caractérisé en ce que le signal de danger est établi d'après la formule suivante:

$$S_I(t_x + z) = K1 \cdot S_I(t_x) +$$
$$K2 \cdot v_{rel}(t_x) \cdot z +$$
$$K3 \cdot a(t_x) \frac{z^2}{2} +$$
$$K4 \cdot \frac{da(t_x)}{dt} \frac{z^3}{3}$$

avec

| | | |
|---|---|---|
| $t_x$ = | | Instant x |
| $z$ = | | Temps d'activation du dispositif de sécurité |
| $a(t)$ = | | Signal du détecteur d'accélération à l'instant t |
| $v_{rel}$ = | | Vitesse relative, calculée par intégration de a (t) |
| $S_I(t)$ = | | Déplacement vers l'avant des occupants à l'instant t (calculé par intégration double du signal du détecteur d'accélération) |
| K1-K4 = | | Facteurs d'évaluation |

3. Procédé selon la revendication 1 ou 2, caractérisé en ce qu'en plus de l'accélération dans la direction de l'axe longitudinal du véhicule, l'accélération transversale est déterminée pour le calcul de la grandeur et de la direction du déplacement présumé des occupants.

$$a_{me\beta} \, (tx)$$

Sensor 10

Korrektur 12

$$a_{ist} \, (tx)$$

$$\int a_{ist} \, dt \qquad \underline{16}$$

$$\frac{d}{dt} \, a_{ist} \, (tx)$$

14

$$v_{rel} \, (tx)$$

→ 38

$$\int v_{rel} \, dt \qquad \underline{18}$$

→ 40

30    32    34    36

Recheneinheit

berechneter Wert    Schwelle

$$\underline{20}$$

22    24

26

28

Fig.1

Fig.2